# EUROPEAN PATENT APPLICATION

(11) **EP 3 241 726 A1**
(43) Date of publication of application: **08.11.2017**
(21) Application number: 17169960.6
(22) Date of filing: 08.05.2017
(51) Int. Cl.: B62H 5/14, B62H 5/18

(54) **ALARMED DISC LOCK**

(30) Priority: 06.05.2016 IT UA20163224
(71) Applicant: MYCLOSE S.r.l., 23870 Cernusco Lombardone (LC) (IT)
(72) Inventor: MAGGI, Corrado, 23870 CERNUSCO LOMBARDONE (IT); CRIPPA, Roberto, 23870 CERNUSCO LOMBARDONE (IT)
(74) Representative: Faggioni, Carlo Maria

(57) **Abstract**

It is disclosed a disc lock comprising an armour body (1) shaped as a fork with two opposed arms (11, 12) defining a slit (F), and a locking pin (P) extending perpendicularly to said slit (F) and apt to be pulled out/retracted protruding from a respective lock key block (2) integral with a first arm (11) of said fork-shaped armour body (1), wherein
said opposing arms (11, 12) have respective apertures (11a, 12a) closed by low electromagnetic shielding components (4, 16, 17),
a second arm (12) opposite said first arm (11) has a housing chamber (15) for housing an active unit (3) provided with an electromagnetic transmission antenna in alignment with said apertures (11a, 12a), of a rechargeable battery unit (33) and a receiving winding (34) for wireless power supply, said active unit (3) being adjacent to a corresponding aperture (12a) closed by a cover in the form of ceramic plate or non-conductive composite material (16).

## Description

### Field of Invention

The present invention relates to a disc lock, of the type used on motorcycles to lock the brake disc, in particular an alarm disc lock.

### BACKGROUND ART

Disc locks are widely known in the art, i.e. anti-theft devices that are attached to the brake disc - typically on motorcycles - and that, due to their bulk, prevent the free rolling of the wheel until they are removed.

Typically, the disc locks are in the form of a more or less wide fork, provided with a transverse pin that can be pulled out of a key lock block so as to cross the inlet passage of the fork and to be locked against the opposite side. The key lock block has a sufficiently sturdy construction in order to prevent tampering.

In use, the fork of the disc lock is mounted on the outer periphery of the brake disc and the pin is inserted into one of the openings provided on the brake disc. In this way, the disc lock can no longer be removed from the brake disc, until one intervenes again on the key lock block to withdraw the pin and free the passage of the disk through the fork.

As it is conceivable, for the disc lock to be effective against tampering attempts it must be constructed with highly resistant material, such as a full body of steel. This construction, however, has so far prevented from providing a product integrating a radio transmitting electronic device, for example a communication system such as that described in WO2013/182971.

The shield consisted of the body of the lock prevents indeed any effective signal transmission, especially since the volume of the disc lock body cannot be too large for accessibility and lightness requirements. Conversely, it is not possible to reduce the protection and thus the shielding level of the housing body, because this would make the electronic system vulnerable to external tampering attempts. A very effective arrangement for the protection of the electronic system has been proposed in WO2013/182971 - where the electronic part is protected between the two arms of a removable fork - but it cannot be used in a disc lock, where the removable component is in the form of a single straight pin.

Still, it should be considered that any inlet/outlet plug of the electronic system, which is located on the outer surface of the protection/shielding body, is a potential vulnerability point for tampering attempts. This is a significant drawback in terms of powering and charging a battery inside the disc lock, to power the electronic part, and has so far prevented the finding of an effective solution for this industry.

Documents CN 203078642 U and CN 201447975 U disclose two very similar disc locks, which represent the preamble of the appended main claim. In these two cases, an electronic part is provided that is housed inside a bulge of the disc lock body that connects one of the forks with the key lock block. However, the bulge of the disc lock body is constructed with the same sturdy material as the resistant skeleton of the disc lock, so it has a significant shielding effect. In addition, the electronic part is installed in a position that is well protected by tamperings, but is far from the mobile end of the transverse closing pin and is not expected to be charged from the outside.

### Summary of the invention

The problem underlying the invention is therefore to propose a disc lock structure and a relative system that overcomes the above-mentioned drawbacks. Specifically, it is indeed to provide a disc lock that accommodates a radio transmission system, which has an adequate range of intercommunication with medium-distance external devices. At the same time, the disc lock must have a proper configuration without compromising its robustness, it must allow for supplying of an internal battery power and be able to easily detect the condition of the transverse pin closure.

These objects are achieved by the features mentioned in the main appended claim. The dependent claims describe preferred features of the invention.

### Brief description of the drawings

Further features and advantages of the invention will anyhow be more evident from the following detailed description of a preferred embodiment, given by mere way of non-limiting example and illustrated in the accompanying drawings, wherein:
Fig. 1 is an elevational side view of a disc lock of the invention;
Fig. 2 is an exploded perspective view of the components constituting the disc lock of Fig. 1;
Figs. 3A and 3B are two left and right perspective views of the body component of the disc lock of Fig. 1;
Fig. 4 is an exploded view of the active core component of the disc lock of Fig. 1;

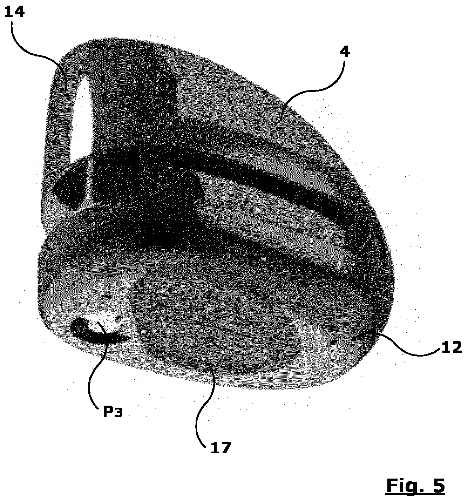

Fig. 5 is a perspective view of the lower side of the disc lock of Fig. 1;
Fig. 6 is a partially transparent perspective view of the locking pin inserted in the active core of the disc lock of Fig. 1;
Figs. 7A and 7B are detailed views, with removed parts, of the locking pin and detection board, in the alarm-locking and mechanical closing only configurations, respectively;
Figs. 8A and 8B are perspective views of the wireless charging base, respectively alone and coupled with the disc lock of Fig. 1; and
Fig. 8C is an exploded view of the base of Fig. 8A.

### Exemplary detailed description

The disc lock according to the invention is generally constituted by a containment body which is sufficiently robust to resist tampering attempts (for example obtained by a metal cast), defining a slit through which a peripheral area of a brake disc may be at least partially inserted (not shown). The disc lock is also traditionally provided with a locking pin, which is normally in the withdrawn position and can be pulled out perpendicularly to the slit until it passes through it completely and is locked in the extracted position by a key lock block.

In essence, the containment body defines at least two fork branches, the retractable locking pin transversally extending there between. The locking pin comes out of a key lock block, which is secured, to one of the two branches of the fork.

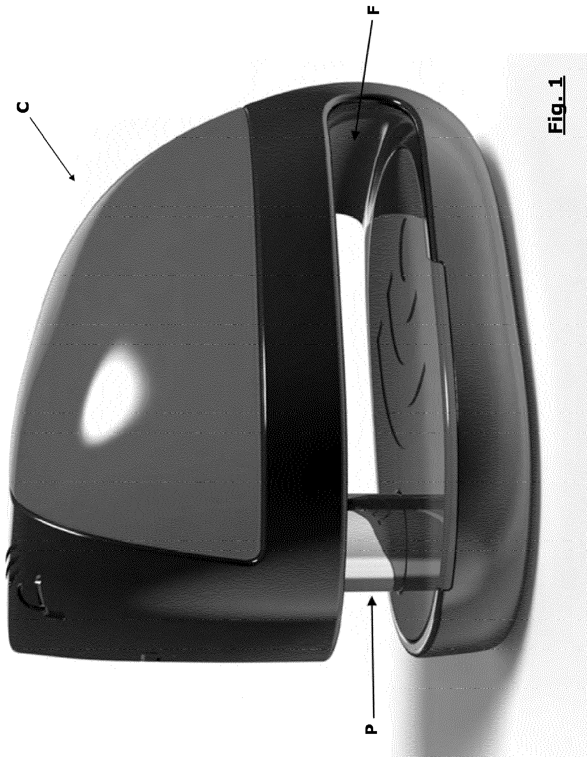

In the following, reference will be conveniently made to the disc lock in the configuration shown in Fig. 1, i.e. with the upper side in the top of the figure and the lower side in the lower part.

Fig. 1 well represents the disc lock in its overall configuration, in which the containment body is generally indicated by C, the slit F for insertion of the brake disc and the locking pin P is in the closed position.

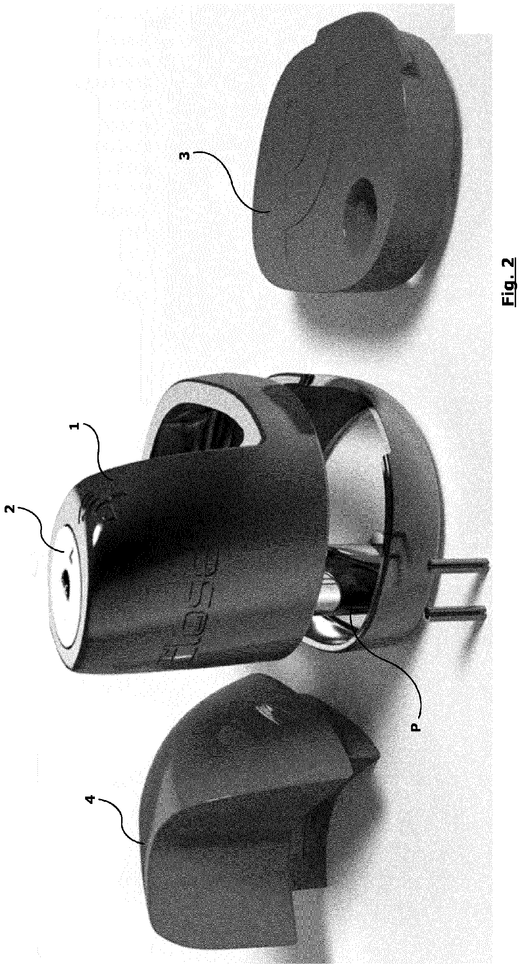

In Fig. 2, the same disc lock is shown broken down in its various components. According to the invention, the disc lock comprises a fork armour body 1, a key clamping block 2 secured to one of the arms of the fork 1, a locking pin P protruding from the clamping key block 2, an active core 3, and a closure and fitting cover 4.

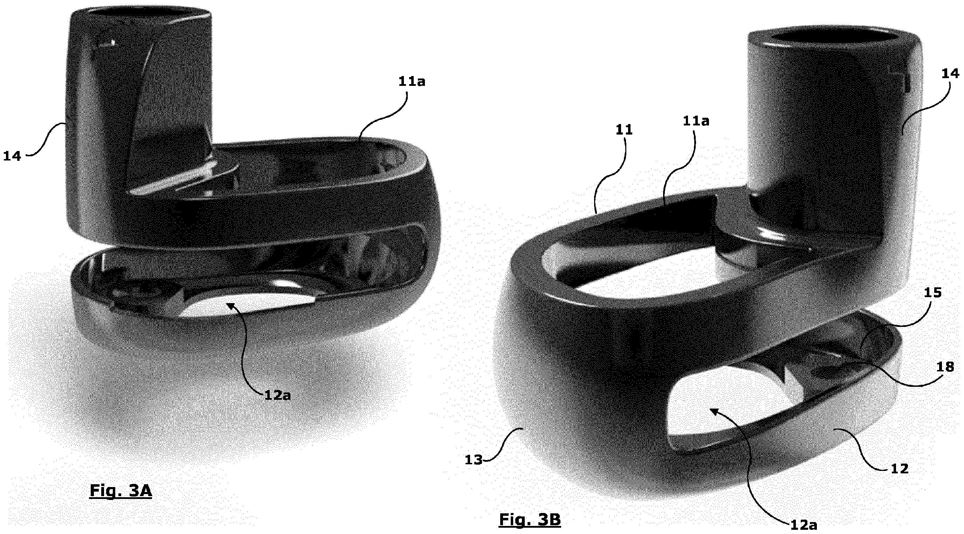

In Figs. 3A and 3B it is possible to appreciate in detail the singular shape of the fork armour body 1. In particular, it should be noted that the armour body 1 has a main portion in the form of a fork, with two arms 11 and 12, and a connecting portion 13, defining therebetween the slit F for introducing a brake disc, and an accommodating compartment 14, perpendicularly protruding from the distal end of an arm 11. All these elements are integrally formed to constitute the armour body. Both arms 11 and 12 of the fork 1 have large apertures.

The accommodating compartment 14 is hollow, so as to accommodate the lock clamping key block 2 and the respective locking pin P.

The arm 12, opposite to the arm 11 from which the compartment 14 extends, has a housing chamber 15 adapted to host the active core 3 which will be described further below.

The entire armour body 1 is of a material resistant to possible tampering attempts, for example of steel. Preferably, it is integrally obtained, so as not to present any connections that would make it more vulnerable.

According to a peculiar feature of the present invention, the two arms 11 and 12 have a width at least equal to that of the accommodating compartment 14 and are in the shape of plates with a large central aperture, respectively an upper aperture 11a and a lower aperture 12a. In particular, the aperture 11a on the arm 11 to which the lock key block 2 is integral with may be very wide, because it will in any case be partially protected at the bottom by the presence of the brake disc that would prevent reaching the housing chamber 15 on the opposed arm 12. Conversely, the aperture 12a on the arm 12 of the disc lock accommodating the housing chamber 15 is of a size substantially corresponding to that of a transmission antenna of the active core 3, which will be described below.

The upper aperture 11a is intended to be closed to view by the closure component 4, made of a material substantially transparent to electromagnetic waves, for example of plastic material. The purpose of the closure component 14 is not structural, but only to serve as a connection body part between the arm 11 of the fork 1 and the compartment 14.

The lower aperture 12 is intended to be closed by a cover 16 of material transparent to electromagnetic waves, but of high tenacity and strength, for example of ceramic material or non-conductive composite material, for example kevlar. In turn, the closure cover 16 is preferably covered externally by a shock-proof flat shell 17, for instance made of shock-absorbing ABS, which can be coloured and finished in a similar and consistent manner with the material of the closure component 4.

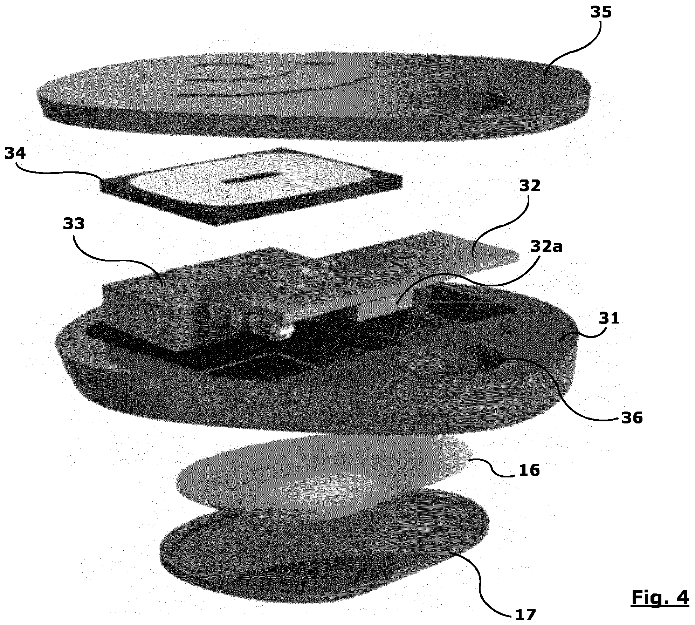

The active unit 3, best shown in Fig. 4, is housed inside the housing chamber 15. The active unit 3 is constituted by a plastic material container 31, which is substantially transparent to electromagnetic waves, in which the components necessary for making an active anti-tampering device, for instance of the type described in WO2013/182971, are incorporated. In particular, an electronic board 32, a battery 33, and a receiving winding 34 are incorporated into the container 31. The container 31 is closed by a shell 35. The entire container 31 with its closing shell 35 has a conformation and thickness suitable to find position in the housing chamber 15 of the arm 12 opposed to the arm 11 to which the lock key block 2 is integral.

The electronic board 32 has a transmission antenna (with frequency determined by the intended functionality of the circuit) lying in a plan in a position corresponding to that of the cover 16 and the upper aperture 11a and lower aperture 12a. The container 31, the shell 17 for the protection of the cover 16 and the closing shell 35 are preferably made of the same plastic material, so that they can be welded together (for example, by ultrasounds) and constitute a single, sealed and sturdy casing.

No inlet/outlet port of the electronic system is provided, because the transmission to the outside is through a transmission antenna (not shown) and the energy input to charge the battery 33 is provided via a wireless system, that is, through the receiving winding 34 (as will be described later).

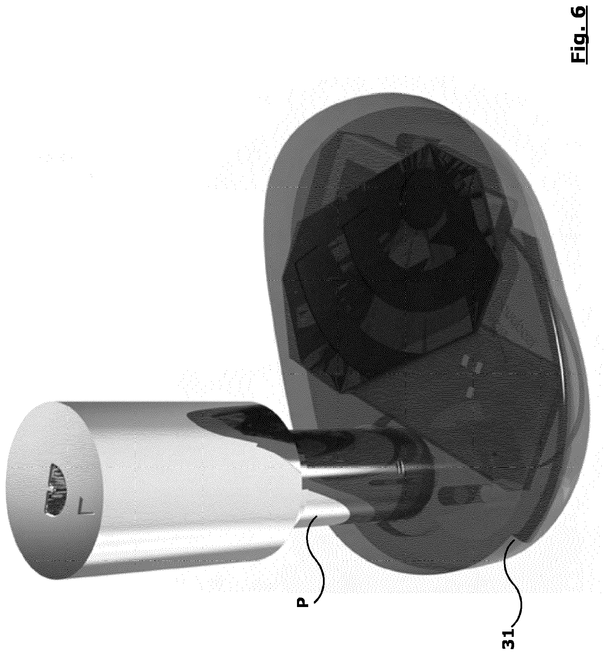

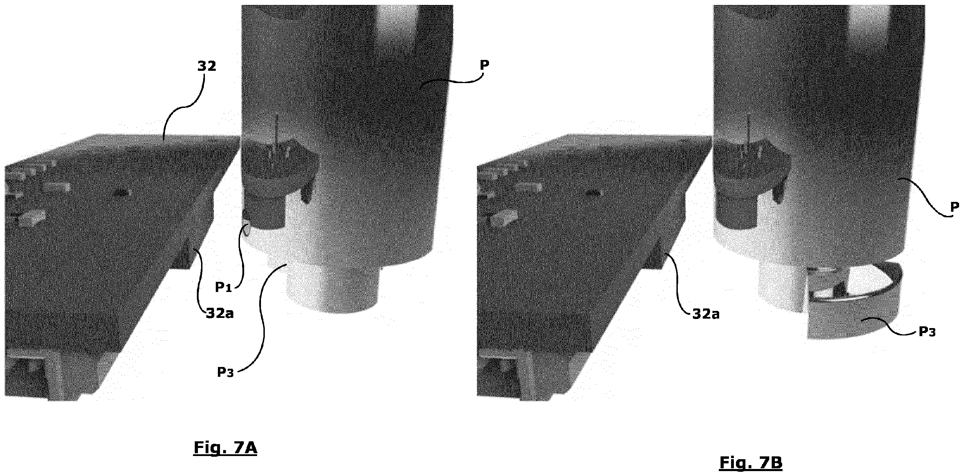

According to the illustrated embodiment, the container 31 - and possibly the shell 35 - is also crossed by a through hole 36 that is provided near the circuit board 32, in particular near its proximity sensor 32a. As well shown in Figs. 6, 7A and 7B, the hole 36 is intended to accommodate the end portion of the locking pin P on which a positioning element P₁ is obtained, suitable for being detected by the proximity sensor 32a: for example, the positioning element P₁ is in the form of a magnetic button inserted in a predetermined angular position of the locking pin P.

With this configuration, it is possible to pull the locking pin P in a traditional manner towards a locking position which, however, provides two different angular positions: one (Fig. 7A) where the magnetic button P₁ is detected and the active part of the anti-tampering electronic system is thus activated, while only a traditional mechanical lock of the pin P is inserted into the other position (7B).

As can be seen from the figures, the terminal end of the pin P also has an angular sector-shaped detent P₃, which is configured to remain into an undercut external to the lower arm 12 in both angular locking positions. To this end, a hole 18 is provided in the bottom of the housing chamber 15 with a section corresponding to that of the detent P₃, so that the detent P₃ can pass through during the extraction and retraction of the pin P, but then remain into an undercut in the two angular locking positions.

According to the invention, in addition, to charge the battery 33 of the electronic system, a wireless system of known type per se is used, which transfers energy to the receiving winding 34 by means of proximity communication.

To this end, the system of the invention provides a charging base 5 to be introduced into the slit F of the disc lock, provided with a transmission winding 51 suitable for transferring energy to the receiving winding 34 inside the active unit 3.

The transmission winding 51 is embedded in the base 5 together with its electrical control unit 52 which in turn draws electrical power from an external port 53 exposed to the outside of the base 5, for example a micro-USB port.

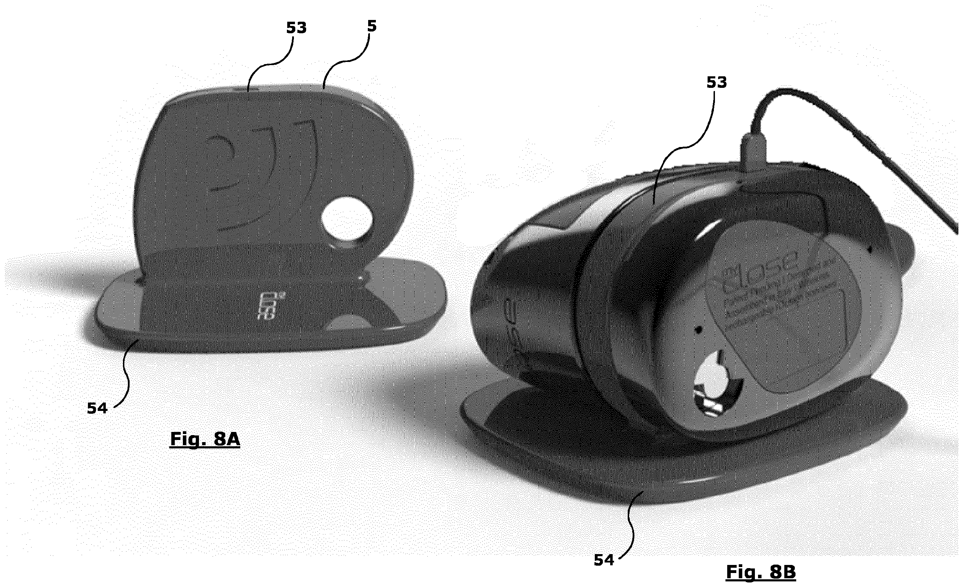

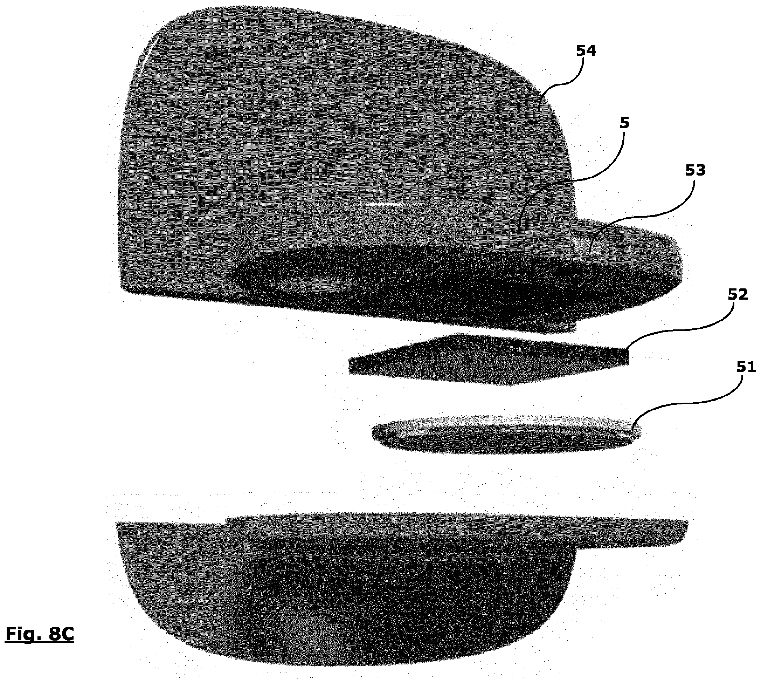

As can be seen in Figs. 8A-8C, according to a preferred embodiment, the base 5 has a shape and a thickness that are perfectly matched with the shape and width of the slit F of the disc lock. This makes the charging process particularly convenient because the disc lock is easily retained on the charging base without having to resort to other arrangements to keep the two charging windings in the correct proximity.

Even more preferably, the base 5 is also fixed perpendicular to a respective flat pedestal 54 which also acts as a support for the same disc lock when it is placed in the charging position, as well shown in Fig. 8B.

The flat pedestal 54 is preferably provided with appropriate fixing members on the lower side, which allow it to be fastened to a plane but also to a frame (for example, the same frame of a motorcycle).

According to the preferred embodiment shown in the figures, the base 5 has a through hole in correspondence with the locking pin so that the disc lock can be firmly secured to the base: this allows to fasten the pedestal 54 in any configuration, avoiding the possibility that the disc lock may fall.

As can be seen from the above description, the disc lock and the overall system of the invention allow to perfectly achieve the purposes stated in the introduction.

Indeed, the specific construction/configuration of the armour body allows the active unit to incorporate an electromagnetic wave transmission element that is not shielded by the sturdy material of the disc lock. In fact, the presence of the upper and lower apertures in the fork arms allows for a wide transmission range in the two opposite directions. Nevertheless, the robustness of the disc lock is not compromised, and the active electronic part is still sufficiently protected by any intrusion attempts with tools from the outside: in fact, the upper aperture does not leave access to the active unit, because there is the interposition of a brake disc, while the lower aperture is protected by the closing cover of ceramic or composite material.

The absence of any inlet/outlet port on the active core - thanks to the incorporation of a receiving winding for wireless power supply - further reduces any possibility of intrusion and direct tampering of the active part of the anti-tampering system.

In addition, the locking pin, which can be operated with the lock key block, acts both as a conventional mechanical locking mechanism and as a start-up switch of the active unit. The two locking positions of the pin P allow the user to choose whether or not to activate the electronic part of the anti-tampering system, but also allow the lock disc to be carried in the closed configuration (hence with the lock key block in the minimum footprint position) without activating the electronic anti-tampering system. The active core arrangement on the fork arm opposite the lock key block makes it easy to detect the lock condition of the locking pin as the end of the pin ends near the electronic board located in the housing chamber on the fork arm.

The original wireless charging base configuration defines a system complete with a disc lock and its support, which is very user-friendly and easy-to-use.

It is understood, however, that the invention is not to be considered as limited by the particular illustrated and described arrangements, which represent only exemplary embodiments of the same, but different variants are possible, all within the reach of a person skilled in the art, without departing from the scope of the invention itself, as defined by the appended claims.

In particular, although the closure component 4 - substantially transparent to electromagnetic waves - has been briefly illustrated with a general function of aesthetic connection of external surfaces, may also have a more substantial function. For example, it can act as a simple container or house a self-powered siren body or other device that is not critical to the operation of the disc lock.

## Claims

1. Disc lock comprising an armour body (1) shaped as a fork with two opposed arms (11, 12) defining a slit (F), and a locking pin P extending perpendicularly to said slit (F) and apt to be pulled out/retracted protruding from a respective lock key block (2) integral with a first arm (11) of said fork-shaped armour body (1), **characterized in that**
said opposing arms (11, 12) have respective apertures (11a, 12a) closed by low electromagnetic shielding components (4, 16, 17),
a second arm (12) opposite said first arm (11) has a housing chamber (15) for housing an active unit (3) provided with an electromagnetic transmission antenna in alignment with said apertures (11a, 12a), of a rechargeable battery unit (33) and a receiving winding (34) for wireless power supply, said active unit (3) being adjacent to a corresponding aperture (12a) closed by a cover in the form of ceramic plate or non-conductive composite material (16).

2. Disc lock as in 1, wherein said active unit (3) internally houses a proximity sensor (32a) arranged near a lying axis of said locking pin (P).

3. Disc lock as in 2, wherein said locking pin (P) is provided with a positioning element (P₁) fixed at a predetermined angular position and is also rotatably mounted on said armour body (1) by means of said lock key block (2).

4. Disc lock as in 3, wherein a distal end of said locking pin (P) is provided with an angular sector-shaped detent (P₃) designed so as to remain into an undercut external to said second arm (12).

5. Disc lock as in any one of the preceding claims, wherein said active unit (3) is sealed.

6. Disc lock as in any one of claims 2 to 5, wherein said active unit (3) has a through hole where said lying axis of said locking pin (P)is passing through.

7. Disc lock as in any one of the previous claims, wherein said armour body also has an accommodating (14) for housing said lock key block (2), which is integral with said first arm (11) and has an axis perpendicular to the plane of said slit (F).

8. Safety system for motorcycles, comprising a disc lock as in any one of the preceding claims, **characterized in that** it further comprises a wireless charging base (5), provided with an energy transmission winding (51) powered by an external electrical connection port (53), perpendicularly secured to a support pedestal (54), said wireless charging base (5) being configured to be coupled to said slit (F).
